# FASCICULE DE BREVET EUROPEEN

(11) **EP 4 298 365 B1**
(45) Date de publication et mention de la délivrance du brevet: **25.12.2024**
(21) Numéro de dépôt: 22707177.6
(22) Date de dépôt: 23.02.2022
(51) Int. Cl.: F16L 11/08, F16L 11/16

(54) **CONDUITE FLEXIBLE AVEC AU MOINS UN ORIFICE DE CIRCULATION DE GAZ OBLIQUE, ET PROCÉDÉ DE FABRICATION ASSOCIÉ**
FLEXIBLES ROHR MIT MINDESTENS EINER SCHRÄG VERLAUFENDEN GASZIRKULATIONSÖFFNUNG UND ZUGEHÖRIGES HERSTELLUNGSVERFAHREN
FLEXIBLE PIPE HAVING AT LEAST ONE OBLIQUE GAS CIRCULATION ORIFICE, AND ASSOCIATED MANUFACTURING METHOD

(30) Priorité: 25.02.2021 FR 2101833
(43) Date de publication de la demande: 03.01.2024
(73) Titulaire: TechnipFMC Subsea France, 92400 Courbevoie (FR)
(72) Inventeur: DROUES, Alain, 76480 LE MESNIL SOUS JUMIÈGES (FR); DESAMAIS, Nicolas, 76190 ECALLES-ALIX (FR); PLENNEVAUX, Cécile, 76480 JUMIÈGES (FR); MACHNIK, Adam, 76420 BIHOREL (FR)
(74) Mandataire: Lavoix
(86) Numéro de dépôt international: PCT/EP2022/054536
(87) Numéro de publication internationale: WO 2022/180100

(56) Documents cités:
- EP-A1- 1 546 596
- FR-A1- 2 846 395
- FR-A1- 2 852 658
- US-A- 4 377 186
- US-A1- 2003 056 845
- US-A1- 2011 030 831

## Description

La présente invention concerne une conduite flexible de transport de fluide, comportant :
- une gaine tubulaire en polymère délimitant un passage de circulation de fluide d'axe central ;
- une voûte de pression, disposée autour et à l'extérieur de la gaine tubulaire, la voûte de pression comportant un enroulement à pas court d'au moins un fil de forme, le fil de forme comportant une pluralité de spires agrafées ;
- au moins une couche d'armures disposée à l'extérieur de la voûte de pression.

La conduite flexible est par exemple telle que décrite dans les documents normatifs publiés par l'American Petroleum Institute (API), API 17J, 4ème édition - mai 2014 et API RP 17B, 5ème édition - mars 2014.

Les demandes de brevet US 2003/056845 A1 ou US 2011/030831 A1 dévoilent des conduites flexibles.

De telles conduites flexibles sont notamment utilisées comme lignes de production, d'injection d'eau ou de gaz, d'export de gaz, de service, notamment en mer profonde dans l'industrie pétrolière et gazière. Elles s'étendent généralement à travers une étendue d'eau entre une installation de surface et un ensemble de fond ou entre deux ensembles de fond. Ces lignes peuvent également s'étendre entre deux installations de surface.

L'installation de surface est par exemple une barge, une plateforme semi-submersible, un FPSO (pour « Floating Production Storage and Offloading », soit ensemble de stockage et de déchargement de production flottant), un FLNG (pour « Floating Liquefied Natural Gas », soit ensemble de liquéfaction de gaz naturel flottant), un FSU (pour « Floating Storage Unit », soit unité de stockage flottant), ou un autre ensemble flottant.

Les conduites flexibles comportent généralement une gaine externe de protection définissant un volume intérieur et au moins une gaine interne imperméable aux liquides disposée à l'intérieur du volume intérieur. La gaine interne est typiquement une gaine de pression délimitant un passage de circulation d'un fluide.

Le fluide transporté par ce type de conduite est, en particulier, un mélange d'hydrocarbures pouvant comporter une forte teneur en gaz corrosifs, comme du dioxyde de carbone (CO₂) et/ou du sulfure d'hydrogène (H₂S).

La gaine externe de protection et la gaine interne délimitent entre elles un espace annulaire recevant généralement au moins une couche de renfort métallique.

La couche de renfort métallique comprend par exemple une voûte de pression formée par un enroulement d'un fil profilé métallique agencé et agrafé (« interlocked » en anglais) autour de la gaine de pression. Le profil est agrafé de façon à limiter le fluage de la gaine de pression sous l'effet de la pression interne.

La couche de renfort métallique comprend également des couches d'armures de traction formées par des nappes de fils métalliques disposées autour de la voûte de pression, dans l'espace annulaire, pour assurer une bonne résistance à la traction.

L'espace annulaire contenant la voûte de pression et les couches d'armures de traction est généralement soumis à des gaz acides issus des fluides transportés et qui diffusent au travers de la gaine interne. La pression partielle de ces gaz acides au sein de l'espace annulaire est parfois relativement élevée.

En présence d'eau, pouvant provenir de l'eau contenue dans les hydrocarbures transportés ayant migré à travers la gaine interne vers l'espace annulaire, ou provenant de l'étendue d'eau en cas d'une déchirure de la gaine externe, les couches de renforcement métalliques situées dans cet espace annulaire, en particulier la voûte de pression et les couches d'armures de traction, subissent alors de la corrosion.

Ceci peut conduire, suivant la sévérité du milieu régnant dans l'espace annulaire, à une perte d'intégrité des propriétés mécaniques de la conduite et à terme, à sa ruine.

Par ailleurs, la combinaison du milieu corrosif associé à des chargements mécaniques (venant des étapes de fabrication et des chargements en opération) peut conduire à la formation de corrosion sous contrainte (SCC, de l'anglais « Stress Corrosion Cracking »).

Compte tenu de l'agrafage de la voûte de pression, une quantité importante de gaz corrosifs est susceptible de s'accumuler dans l'espace annulaire, à l'intérieur de la voûte de pression. Ceci rend le milieu particulièrement corrosif entre la gaine de pression et la voûte de pression.

Dans certains cas, en présence d'une voûte de pression, la pression partielle en dioxyde de carbone sous la voûte de pression est susceptible d'augmenter significativement, typiquement d'un facteur trois par rapport à un flexible sans voûte de pression agrafée, voire plus dans certains cas critiques. Ceci peut entraîner des phénomènes de corrosion sous contrainte locaux pour la voûte de pression et entraîner sa ruine.

Un but de l'invention est donc de fournir une conduite flexible de transport de fluide, apte à transporter des fluides corrosifs, mais qui présente une durée de vie améliorée, en particulier au niveau de la voûte de pression.

A cet effet, l'invention a pour objet une conduite flexible du type précité, caractérisée en ce que le fil de forme présente au moins un orifice de circulation de gaz oblique à travers la voûte de pression depuis l'intérieur de la voûte de pression vers l'extérieur de la voûte de pression, l'orifice de circulation de gaz oblique présentant au moins un axe local oblique définissant, avec l'axe central, un angle d'inclinaison non nul strictement inférieur à +90° et strictement supérieur à -90°, l'orifice de circulation de gaz oblique permettant la circulation de gaz entre l'intérieur de la voûte de pression et l'extérieur de la voûte de pression en plus d'au moins un jeu entre les spires agrafées, ou en l'absence de jeu entre les spires agrafées.

La conduite flexible selon l'invention peut comprendre l'une ou plusieurs des caractéristiques suivantes, prise(s) isolément ou suivant toute combinaison techniquement possible :
- le ou chaque orifice de circulation de gaz oblique est formé dans la partie centrale massive du fil de forme ;
- au moins une section transverse du ou de chaque orifice de circulation de gaz oblique, de préférence toutes les sections transverses du ou de chaque orifice de circulation de gaz oblique, prises perpendiculairement à l'axe local oblique, présentent un contour fermé ;
- le contour fermé est circulaire, oblong, ou polygonal ;
- l'aire de la section transverse est constante entre une extrémité intérieure et une extrémité extérieure de l'orifice de circulation de gaz oblique ;
- l'aire de la section transverse est non constante entre une extrémité intérieure et une extrémité extérieure de l'orifice de circulation de gaz oblique,
- l'aire de la section transverse prise au niveau de l'extrémité intérieure est différente de l'aire de la section transverse, prise au niveau de l'extrémité supérieure, par exemple d'au moins 5% ;
- l'angle d'inclinaison est compris entre +15° et + 60° ou entre -15° et -60°, notamment entre +20° et +40° ou entre -20° et -40° ;
- chaque spire définit au moins un orifice de circulation de gaz oblique ayant un angle d'inclinaison positif et au moins un orifice de circulation de gaz oblique ayant un angle d'inclinaison négatif, le ou chaque orifice de circulation de gaz oblique ayant un angle d'inclinaison positif étant de préférence décalé angulairement du ou de chaque orifice de circulation de gaz oblique ayant un angle d'inclinaison négatif, autour de l'axe central ;
- chaque spire définit entre un et vingt orifices de circulation de gaz obliques présentant un axe local oblique ;
- le ou chaque orifice de circulation de gaz oblique présente une dimension transversale minimale, prise perpendiculairement à l'axe local oblique, supérieure à 0,1 mm et notamment comprise entre 0,5 mm et 3 mm ;
- le ou chaque orifice de circulation de gaz oblique s'étend le long de l'axe local oblique à travers la voûte de pression entre une extrémité intérieure et une extrémité extérieure, éventuellement avec l'axe local oblique incliné par rapport à une perpendiculaire à un axe longitudinal local du fil de forme ;
- chaque spire définit avec une spire adjacente, un canal intérieur débouchant vers la gaine tubulaire et avec une spire adjacente opposée, un canal extérieur débouchant vers la ou chaque couche d'armures, le ou chaque orifice de circulation de gaz oblique ménagé à travers la spire débouchant à une extrémité intérieure, dans le canal intérieur entre la spire et la spire adjacente et à une extrémité extérieure, dans le canal extérieur entre la spire et la spire adjacente opposée ;
- chaque spire présente, en section dans un plan axial médian, un profil définissant une partie centrale et au moins une partie d'extrémité, la ou chaque partie d'extrémité comportant au moins un téton et pour le ou chaque téton, une gorge adjacente au téton, le téton étant propre à s'agrafer dans une gorge d'une spire adjacente d'un fil de forme de la voûte de pression, le ou chaque orifice de circulation de gaz oblique s'étendant au moins partiellement à travers la partie centrale ;
- le profil de chaque spire définit, en section dans un plan axial médian, un téton et une gorge adjacente au téton, le téton étant propre à s'agrafer dans une gorge d'une spire adjacente d'un fil de forme de la voûte de pression, le profil de chaque spire définissant, en section dans un plan axial médian, un téton additionnel et une gorge additionnelle adjacente au téton additionnel, le téton additionnel étant propre à s'agrafer dans une gorge d'une spire adjacente opposée d'un fil de forme de la voûte de pression, située à l'opposé de la spire adjacente ;
- la conduite comporte au moins un passage additionnel de circulation de gaz formé par une encoche ménagée dans le ou dans chaque téton ;
- la largeur de l'encoche ménagée dans le ou dans chaque téton est inférieure à 33% du périmètre du bord libre du téton ;
- la hauteur de l'encoche est comprise entre 5% et 100% de la hauteur du téton, prise radialement par rapport à l'axe central entre le fond de la gorge et le bord libre du téton à l'écart de l'encoche ;
- la conduite comporte au moins une première région longitudinale comportant des spires définissant au moins un orifice de circulation de gaz oblique, sans aucun passage additionnel de circulation de gaz dans le ou dans chaque téton, et une deuxième région longitudinale comportant des spires présentant au moins un passage additionnel de circulation de gaz dans le ou chaque dans téton, sans aucun orifice de circulation de gaz oblique ;
- le profil du fil de forme est choisi parmi un profil de section en Z, en T, en Ψ, en K et en C.

L'invention a également pour objet un procédé de fabrication d'une conduite flexible, comportant les étapes suivantes :
- fourniture d'une gaine tubulaire en polymère délimitant un passage de circulation de fluide d'axe central ;
- formation d'une voûte de pression autour de la gaine tubulaire, la formation comportant un enroulement à pas court et un agrafage d'au moins un fil de forme, le fil de forme comportant une pluralité de spires agrafées ;
- disposition d'au moins une couche d'armures à l'extérieur de la voûte de pression,
caractérisé en ce que le fil de forme présente au moins un orifice de circulation de gaz oblique à travers la voûte de pression depuis l'intérieur de la voûte de pression vers l'extérieur de la voûte de pression, l'orifice de circulation de gaz oblique présentant au moins un axe local oblique définissant, avec l'axe central, un angle d'inclinaison non nul strictement inférieur à 90°, l'orifice de circulation de gaz oblique permettant la circulation de gaz entre l'intérieur de la voûte de pression et l'extérieur de la voûte de pression en plus d'au moins un jeu entre les spires agrafées, ou en l'absence de jeu entre les spires agrafées.

Le procédé selon l'invention peut comprendre l'une ou plusieurs des caractéristiques suivantes, prise(s) isolément ou suivant toute combinaison techniquement possible :
- le ou chaque orifice de circulation de gaz oblique est ménagé préalablement à l'enroulement du ou de chaque fil de forme, par usinage, par électroérosion, par faisceau d'électrons ou par perçage laser.

L'utilisation d'une conduite flexible telle que définie plus haut est également décrite, pour le transport d'un fluide à travers le passage de circulation de fluide, l'utilisation comportant la diffusion d'un gaz contenu dans le fluide à travers la gaine tubulaire, puis à travers la voûte de pression, en passant par le ou chaque orifice de circulation de gaz oblique, depuis l'intérieur de la voûte de pression vers l'extérieur de la voûte de pression.

L'invention sera mieux comprise à la lecture de la description qui va suivre, donnée uniquement à titre d'exemple, et faite en se référant aux dessins annexés, sur lesquels :
- [Fig 1] La figure 1 est une vue en perspective partiellement écorchée d'un tronçon central d'une première conduite flexible selon l'invention
- [Fig 2] La figure 2 est une vue partielle, prise en coupe suivant un plan axial médian, d'un détail de la conduite de la figure 1 ;
- [Fig 3] La figure 3 est une vue en coupe illustrant la voûte de pression et les jeux entre les spires successives du fil de forme de la voûte, ainsi que des orifices de circulation de gaz obliques ménagés à travers les spires du fil de forme ;
- [Fig 4] La figure 4 est une vue partielle en perspective d'une spire d'une voûte de pression d'une variante de conduite flexible selon l'invention;
- [Fig 5] La figure 5 est une vue de face du profil d'une encoche ménagée dans un téton d'une voûte de pression d'une conduite selon l'invention, en complément d'un orifice de circulation de gaz oblique non visible sur cette figure ;
- [Fig 6] La figure 6 est une vue analogue à la figure 3 d'une variante de conduite flexible selon l'invention ;
- [Fig 7] La figure 7 est une vue analogue à la figure 3 d'une variante de conduite flexible selon l'invention ;
- [Fig 8] La figure 8 est une vue analogue à la figure 3 d'une variante de conduite flexible selon l'invention ; et
- [Fig 9] la figure 9 est une vue extérieure d'une variante de spire de voûte de pression de la figure 3.

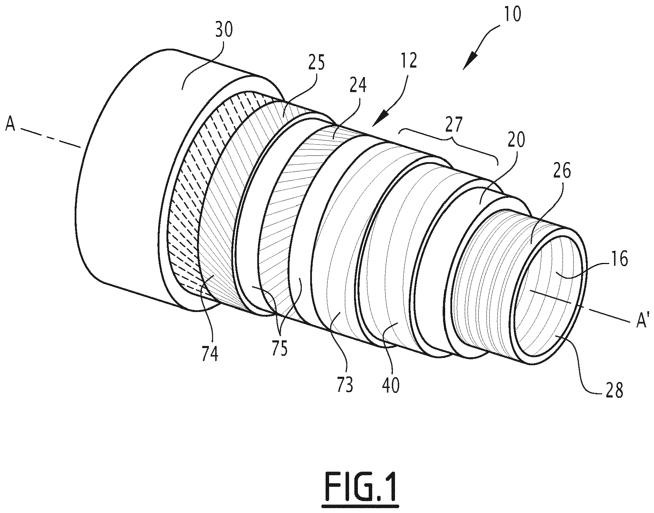

Une première conduite flexible 10 selon l'invention est illustrée partiellement par la figure 1.

La conduite flexible 10 comporte un tronçon central 12. Elle comporte, à chacune des extrémités axiales du tronçon central 12, un embout d'extrémité (non visible).

En référence à la figure 1, la conduite 10 délimite un passage central 16 de circulation d'un fluide, avantageusement d'un fluide pétrolier. Le passage central 16 s'étend suivant un axe central A-A', entre l'extrémité amont et l'extrémité aval de la conduite 10.

La conduite flexible 10 est destinée à être disposée à travers une étendue d'eau (non représentée) dans une installation d'exploitation de fluide, notamment d'hydrocarbures.

L'étendue d'eau est par exemple, une mer, un lac ou un océan. La profondeur de l'étendue d'eau au droit de l'installation d'exploitation de fluide est par exemple comprise entre 50 m et 4000 m.

L'installation d'exploitation de fluide comporte un ensemble de surface notamment flottant et un ensemble de fond (non représentés) qui sont généralement raccordés entre eux par la conduite flexible 10.

La conduite flexible 10 est de préférence une conduite « non liée » (désignée par le terme anglais « unbonded »).

Au moins deux couches adjacentes de la conduite flexible 10 sont libres de se déplacer longitudinalement l'une par rapport à l'autre lors d'une flexion de la conduite. Avantageusement, toutes les couches de la conduite flexible sont libres de se déplacer l'une par rapport à l'autre.

Une telle conduite est par exemple décrite dans les documents normatifs publiés par l'American Petroleum Institute (API), API 17J, 4ème édition - mai 2014 et API RP 17B, 5ème édition - mars 2014.

Par ailleurs, dans tout ce qui suit, les termes « extérieur », « externe » et « intérieur », « interne », s'entendent généralement de manière radiale par rapport à l'axe central A-A' de la conduite, les termes « extérieur » ou « externe » s'entendant comme relativement plus éloignés radialement de l'axe A-A' et les termes « intérieur » ou « interne » s'étendant comme relativement plus proche radialement de l'axe A-A' de la conduite.

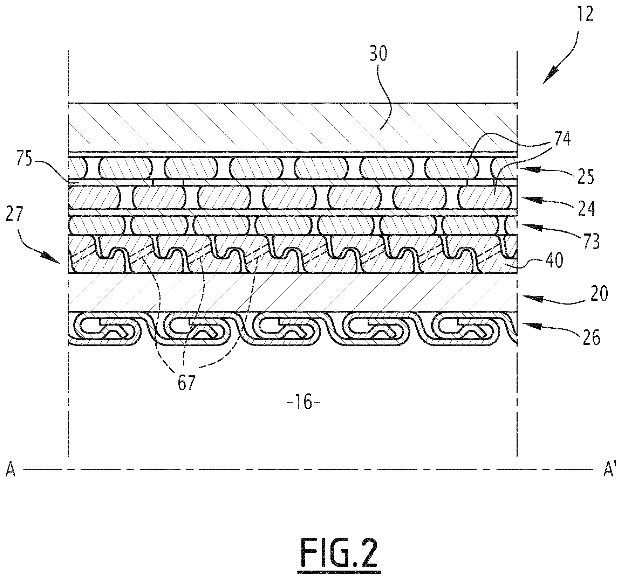

Comme illustré par les figures 1 et 2, la conduite 10 délimite une pluralité de couches concentriques autour de l'axe A-A', qui s'étendent continûment le long du tronçon central 12 jusqu'aux embouts situés aux extrémités de la conduite (non représentés).

Selon l'invention, la conduite 10 comporte au moins une première gaine tubulaire 20 à base de matériau polymère, constituant avantageusement une gaine de pression.

La conduite 10 comporte en outre au moins une couche d'armures de traction 24, 25 disposée extérieurement par rapport à la première gaine 20 formant une gaine de pression.

La conduite 10 comporte en outre éventuellement une carcasse interne 26 disposée à l'intérieur de la gaine de pression 20.

La conduite 10 comporte une voûte de pression 27 intercalée entre la gaine de pression 20 et la ou les couches d'armures de traction 24, 25, et une gaine extérieure 30, destinée à la protection de la conduite 10.

De manière connue, la gaine de pression 20 est destinée à confiner de manière étanche le fluide transporté dans le passage 16. La gaine de pression 20 est avantageusement formée en matériau polymère. Le polymère est par exemple à base d'une polyoléfine telle que du polyéthylène ou du polypropylène, à base d'un polyamide tel que du PA11 ou du PA12, ou à base d'un polymère fluoré tel que du polyfluorure de vinylidène (PVDF).

En variante, la gaine de pression 20 est formée à base d'un polymère haute performance tel qu'un polyaryléthercétone (PAEK) tel que le polyéthercétone (PEK), le polyétheréthercétone (PEEK), le polyétheréthercétonecétone (PEEKK), le polyéthercétonecétone (PEKK) ou le polyéthercétoneéthercétonecétone (PEKEKK), le polyamide-imide (PAl), le polyéther-imide (PEI), le polysulfone (PSU), le polyphénylsulfone (PPSU), le polyéthersulfone (PES) , le polyarylsulfone (PAS), le polyphénylèneéther (PPE), le polysulfure de phénylène (PPS) les polymères à cristaux liquides (LCP), le polyphtalamide (PPA), les dérivés fluorés tels que le polytétrafluoroéthylène (PTFE), le perfluoropolyéther (PFPE), le perfluoroalkoxy (PFA) ou l'éthylène chlorotrifloroethylène (ECTFE) et/ou leurs mélanges

L'épaisseur de la gaine de pression 20 est par exemple comprise entre 5 mm et 20 mm.

La carcasse 26, lorsqu'elle est présente, est formée d'un feuillard métallique profilé 28, enroulé en hélice. Les spires successives du feuillard 28 sont agrafées les unes aux autres.

La fonction principale de la carcasse 26 est de reprendre les efforts radiaux d'écrasement. Les efforts radiaux d'écrasement sont par exemple engendrés par la pression hydrostatique de l'étendue d'eau ou par les équipements de pose pendant l'installation de la conduite.

La carcasse 26 est disposée à l'intérieur de la gaine de pression 20. Elle est propre à entrer en contact avec le fluide circulant dans la gaine de pression 20.

La conduite flexible 10 est alors désignée par le terme anglais « rough bore » en raison de la géométrie de la carcasse 26.

En variante (non représentée), la conduite flexible 10 est dépourvue de carcasse interne, elle est alors désignée par le terme anglais « smooth bore ».

En référence à la figure 1, la voûte de pression 27 est destinée à reprendre les efforts liés à la pression régnant à l'intérieur de la gaine de pression 20. Elle est par exemple formée d'au moins un fil profilé métallique 40 agrafé et enroulé en hélice autour de la gaine de pression 20.

Le matériau métallique formant le fil profilé 40 est choisi parmi un acier au carbone, notamment choisi parmi les grades d'acier au carbone comprenant entre 0,1% et 0,8% de carbone. Lors des applications en milieu particulièrement corrosif, le matériau métallique est choisi parmi les aciers inoxydables tels que les aciers duplex.

La voûte de pression 27 est enroulée en hélice à pas court autour de la gaine de pression 20, c'est-à-dire avec un angle d'hélice de valeur absolue proche de 90° par rapport à l'axe A-A', typiquement compris entre 75° et 90°. Le fil profilé 40 présente généralement une géométrie complexe, ici avec un profil en forme de Z ou Zeta.

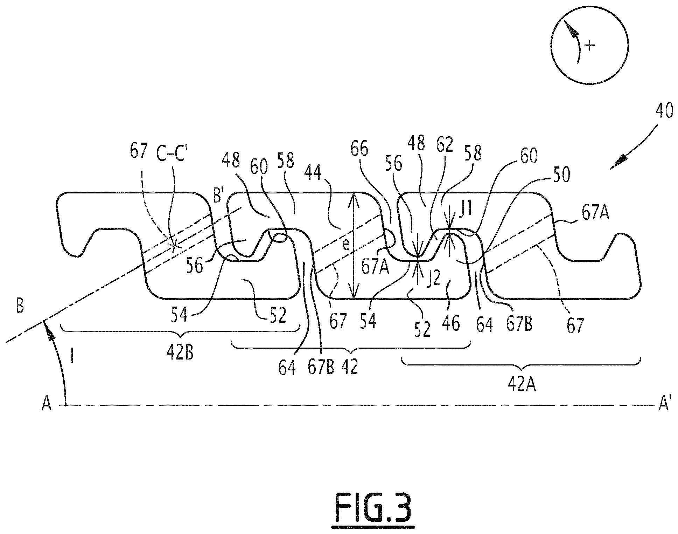

En référence aux figures 2 et 3, le fil de forme profilé 40 comporte une pluralité de spires 42 agrafées les unes aux autres. Chaque spire 42 correspond à un enroulement de 360° autour de l'axe A-A'. Elle présente, en section transversale dans un plan axial médian passant par l'axe A-A', un profil en forme de Z ou Zeta.

Comme illustré par la figure 3, le profil défini par chaque spire 42 présente une partie centrale 44 pleine d'épaisseur e, une première partie d'extrémité intérieure 46 faisant saillie à partir de la partie centrale 44 dans une région intérieure de la partie centrale 44, et une partie d'extrémité extérieure 48 faisant saillie à partir d'une région extérieure de la partie centrale 44, à l'opposé axialement de la partie d'extrémité intérieure 46.

La partie d'extrémité intérieure 46, présente, à son bord libre, un téton 50 intérieur faisant saillie radialement vers l'extérieur. Elle définit, entre le téton 50 et la partie centrale 44, une gorge 52 intérieure délimitée vers l'intérieur par un fond 54.

A l'opposé, la partie d'extrémité extérieure 48 comporte, à son bord libre, un téton 56 additionnel extérieur faisant saillie vers l'intérieur. Le téton additionnel 56 définit, avec la partie centrale 44, une gorge 58 additionnelle extérieure délimitée vers l'extérieur par un fond 60 additionnel.

Dans le plan axial médian passant par l'axe A-A', le téton 50 de chaque spire 42 est ainsi agrafé dans la gorge 58 additionnelle d'une première spire adjacente 42A, en étant reçu dans la gorge 58 contre le fond 60 de la gorge 58.

De même, le téton 56 additionnel de chaque spire 42 s'agrafe dans la gorge 52 d'une deuxième spire adjacente 42B opposée axialement à la première spire adjacente 42A, en étant reçu dans la gorge 52 contre le fond 54 de la gorge 52.

Comme illustré sur la figure 3, le téton 50 de la spire 42 définit avec le fond 60 de la gorge 58 de la spire 42A adjacente un premier jeu J1 radial hélicoïdal permettant le passage de gaz depuis l'intérieur de la voûte 27 vers l'extérieur de la voûte 27.

De même, le fond 54 de la gorge 52 de la spire 42 définit avec le téton additionnel 56 de la spire adjacente 42A, un deuxième jeu J2 radial hélicoïdal permettant le passage de gaz depuis l'intérieur de la voûte 27 vers l'extérieur de la voûte 27.

Les jeux radiaux J1 et J2 sont raccordés entre eux par un interstice 62 incliné entre les tétons 50 et 56 situés en regard.

Le jeu J1 est raccordé à l'espace situé à l'intérieur de la voûte de pression 27 vers l'axe A-A' par un canal intérieur 64 présent entre le téton 50 de la spire 42 et la partie centrale 44 de la spire 42A adjacente.

Le canal intérieur 64 débouche vers l'intérieur en regard de la gaine de pression 20. Il reçoit donc les gaz qui diffusent depuis l'intérieur du passage central 16 de la conduite 10 au travers de la gaine de pression 20.

Le jeu J2 est raccordé à l'espace situé à l'extérieur de la voûte de pression 27 par rapport à l'axe A-A' par un canal 66 extérieur présent entre le téton 56 additionnel de la spire adjacente 42A et la partie centrale 44 de la spire 42. Le canal extérieur 66 débouche vers l'extérieur en regard des couches d'armures 24, 25.

Les canaux intérieur 64 et extérieur 66 sont définis par les intervalles entre les profils des spires 42 et 42A. Le jeu J1 assure donc le passage des gaz entre le canal intérieur 64 et l'interstice 62. De même, le jeu J2 assure le passage des gaz entre l'interstice 62 et le canal extérieur 66.

Lors de la fabrication de la voûte de pression 27, il est contrôlé que les fils profilés 40 sont posés avec des tolérances de pas (« pitch » en Anglais selon la norme API 17J) telles que la conduite 10 présente un rayon minimum de stockage (« SR » ou « Storage Radius » selon la norme API 17J) possédant une marge de tolérance de 10% par rapport à son rayon de courbure de blocage (« LR » ou « Locking Radius » selon la norme API17J). Ainsi, une fois la conduite 10 en service, il existe toujours un interstice 62 et des canaux 64 et 66 non nuls.

Pour des raisons de tolérances de fabrication des profils des spires 42, ou lors des étapes de fabrication de la conduite 10 ou lorsque des efforts radiaux de pression interne et/ou externe s'exercent sur la voûte de pression 27, il se produit parfois un phénomène de tuilage entre spires 42, 42A, 42B adjacentes ou un phénomène de déformation des profils. Cela peut se traduire par une inclinaison radiale par rapport à l'axe A-A' d'une spire 42, 42A, 42B, du fil de forme profilé 40 par rapport à une spire adjacente 42, 42A, 42B du fil de forme profilé 40 ayant pour effet qu'un des tétons 50, 56 d'une spire 42, 42A, 42B soit en contact avec le fond 60, 54 une des gorges 58, 52 de la spire adjacente 42, 42A, 42B.

Au moins un jeu J1 et/ou J2 est alors nul et ainsi les canaux 64, 66 ne communiquent plus avec l'interstice 62. Ainsi, dans une conduite de l'état de la technique, le passage des gaz à travers l'agrafage de la voûte de pression 27 s'en trouve complètement bloqué.

En référence à la figure 3, le fil de forme 40 présente intérieurement sur chaque spire 42 au moins un orifice 67 de circulation de gaz à travers la voûte de pression 27 depuis l'intérieur de la voûte de pression 27 vers l'extérieur de la voûte de pression 27.

Avantageusement, chaque spire 42 du fil de forme 40 présente entre un et vingt orifices de circulation de gaz 67, espacés angulairement autour de l'axe central A-A'. Le nombre d'orifices de circulation de gaz 67 obliques est choisi suivant le diamètre de la conduite flexible 10, et en fonction du dimensionnement des différentes couches et de l'aire de la section transverse des orifices de circulation de gaz 67.

Chaque orifice de circulation de gaz 67 est oblique par rapport à l'axe central A-A'. Il présente au moins un axe local B-B' oblique définissant, avec l'axe central A-A', un angle d'inclinaison I non nul strictement inférieur à +90° et strictement inférieur à -90°, au moins en projection dans un plan axial médian passant par l'axe central A-A' et par un point de l'orifice de circulation de gaz 67.

L'angle d'inclinaison I est compris de préférence entre +15° et +60° ou entre -15° et -60°. Cet angle I est choisi suivant le type de profil envisagé pour la réalisation du fil de forme 40 formant la voûte de pression 27. Il est notamment entre +20° et +40° pour un profil de fil de forme 40 en forme de Z ou Zeta.

De préférence, chaque orifice de circulation de gaz 67 s'étend totalement à travers la partie centrale 44 de chaque spire 42. En variante, au moins un orifice de circulation de gaz 67 s'étend partiellement à travers la partie centrale 44 et partiellement à travers au moins une partie d'extrémité 46, 48

Chaque orifice de circulation de gaz 67 s'étend ici le long de l'axe local oblique B-B' à travers la spire 42 du fil de forme 40, entre une extrémité extérieure 67A et une extrémité intérieure 67B.

L'orifice de circulation de gaz 67 débouche à son extrémité extérieure 67A, dans le canal extérieur 66 entre la spire 42 et la spire adjacente 42A. Il débouche à son extrémité intérieure 67B, dans le canal intérieur 64 entre la spire 42 et la spire adjacente opposée 42B.

L'orifice de circulation de gaz 67 débouchant à son extrémité intérieure 67B, dans le canal intérieur 64 évite un contact avec la gaine de pression 20 et donc, tout risque d'obturation de l'orifice en cas d'un fluage important de la gaine de pression.

Les orifices de circulation de gaz 67 étant ménagés dans la partie centrale 44 la plus massive des spires 42, leur dimension transversale peut ainsi être augmentée, notamment de 30% par rapport à un trou radial s'étendant à travers les parties d'extrémité 46, 48, plus minces.

Chaque orifice de circulation de gaz 67 présente ici une section perpendiculaire à l'axe local B-B' de contour fermé circulaire, oblong, ou polygonal.

Dans un mode de réalisation, l'aire de la section transverse est constante entre une extrémité intérieure 67B et une extrémité extérieure 67A de l'orifice de circulation de gaz 67 oblique.

En variante, l'aire de la section transverse est non constante entre une extrémité intérieure 67B et une extrémité extérieure 67A de l'orifice de circulation de gaz 67 oblique.

Dans ce cas, l'aire de la section transverse prise au niveau de l'extrémité intérieure 67B est de préférence différente de l'aire de la section transverse, prise au niveau de l'extrémité supérieure 67A, par exemple d'au moins 5%.

Avantageusement, l'orifice de circulation de gaz 67 oblique présente une forme conique d'axe B-B', notamment lorsqu'il est ménagé par plusieurs impulsions d'un laser.

L'orifice de circulation de gaz 67 présente une dimension transversale minimale, prise perpendiculairement à l'axe local B-B' (correspondant à un diamètre pour une section transverse de contour circulaire) supérieure à 0,1 mm et notamment comprise entre 0,5 mm et 3 mm.

Dans une variante, l'orifice de circulation de gaz est un trou oblong d'épaisseur comprise entre 0,2 mm et 0,7 mm (par exemple 0,5 mm) et de longueur comprise entre 1 mm et 5 mm (par exemple 3 mm).

Dans l'exemple représenté sur la figure 3, l'axe local oblique B-B' est sensiblement perpendiculaire à l'axe longitudinal local C-C' du fil 40 le long de la spire 42, pris au niveau de l'orifice 67. Les extrémités 67A, 67B de l'orifice de circulation de gaz 67 oblique sont avantageusement espacées angulairement autour de l'axe A-A' d'un angle inférieur à 10°.

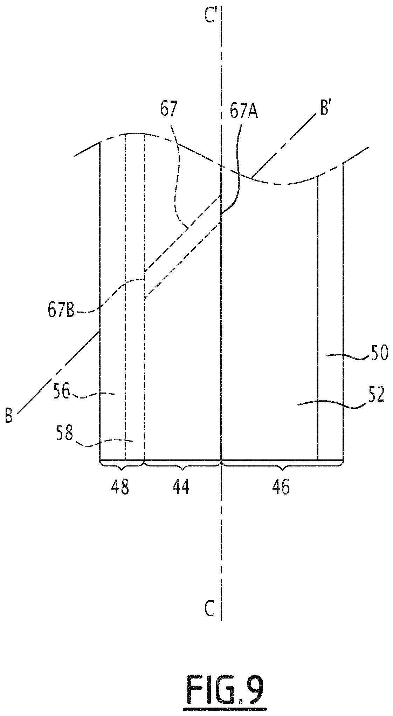

Dans la variante représentée sur la figure 9, l'axe local oblique B-B' est incliné en valeur absolue entre 10° et 50° et préférentiellement à 45° par rapport à l'axe longitudinal local C-C' du fil 40 le long de la spire 42, pris au niveau de l'orifice de circulation de gaz 67. Les extrémités 67A, 67B de l'orifice de circulation de gaz 67 oblique sont alors espacées angulairement autour de l'axe A-A' d'un angle supérieur ou égal à 11°. Ceci répartit la perte de section du fil 40 sur une plus grande longueur du fil 40 et diminue la concentration de contrainte locale.

Chaque orifice de circulation de gaz 67 est ménagé préalablement à l'enroulement du ou de chaque fil de forme 40, par exemple par usinage conventionnel, par usinage haute fréquence, par électroérosion, par faisceau d'électrons ou par perçage laser à haute puissance (libérant par exemple plus de 100 J par impulsion, notamment de l'ordre de 250 J par impulsion pour traverser 5 mm à 10 mm d'acier en une seule impulsion). Le perçage laser garantit une haute cadence de perçage en continu au défilé en mode pulsé.

Un ébavurage et un traitement thermique sont avantageusement appliqués après réalisation des orifices de circulation du gaz 67.

Chaque orifice de circulation de gaz 67 raccorde ainsi de manière directe le long de l'axe local B-B' le canal intérieur 64 débouchant en regard de la gaine de pression 20, d'un côté de la spire 42 au canal extérieur 66 débouchant en regard des couches d'armures 24, 25 d'un autre côté de la spire 42.

Ceci facilite la circulation de gaz entre l'intérieur de la voûte de pression 27 et l'extérieur de la voûte de pression 27 en plus d'au moins un jeu J1, J2 entre les spires agrafées 42, 42A, 42B, en offrant un chemin de passage moins tortueux et plus court qu'à travers l'interstice 62. Ceci assure également la circulation de gaz entre l'intérieur de la voûte de pression 27 et l'extérieur de la voûte de pression 27 en l'absence de jeu J1, J2 entre les spires agrafées 42, 42A, 42B.

Ainsi, même si un effet de blocage se produit, lié à l'agrafage complet de la voûte de pression 27, notamment lié au contact des tétons 50, 56 respectifs avec les fonds 54, 60 respectifs des gorges respectives 58, 52, provoquant la disparition des jeux J1 et J2, les orifices de circulation de gaz 67 définis à travers la partie centrale 44 du fil de forme 40 offrent une surface de passage pour les gaz, et empêchent leur accumulation à l'intérieur de la voûte de pression 27.

Ceci diminue très significativement la pression partielle de gaz corrosifs à l'intérieur de la voûte de pression 27, notamment entre la voûte de pression 27 et la gaine de pression 20. L'effet de la tortuosité devient alors contrôlable.

La conduite flexible 10 comprend optionnellement une frette 73, visible partiellement sur les figures 1 et 2.

La frette 73, lorsqu'elle est présente, est constituée par un enroulement en spirale d'au moins un fil avantageusement de section transversale rectangulaire autour de la voûte de pression 27. La superposition de plusieurs fils enroulés autour de la voûte de pression 27 remplace avantageusement une épaisseur totale de frette 73 donnée. Ceci augmente la résistance à l'éclatement de la conduite flexible 10. L'enroulement d'au moins un fil est à pas court autour de l'axe A-A' de la conduite flexible 10, c'est-à-dire avec un angle d'hélice de valeur absolue proche de 90° par rapport à l'axe A-A', typiquement compris entre 75° et 90°.

La conduite flexible 10 selon l'invention comprend au moins une couche d'armures 24, 25 formée d'un enroulement hélicoïdal d'au moins un élément d'armure 74 allongé.

Dans l'exemple représenté sur la figure 1, la conduite flexible 10 comporte une pluralité de couches d'armures 24, 25, notamment une couche d'armures intérieure 24, appliquée sur la voûte de pression 27 ou sur la frette 73, lorsque présente, et une couche d'armures extérieure 25 autour de laquelle est disposée la gaine extérieure 30.

Chaque couche d'armures 24, 25 comporte des éléments d'armure 74 longitudinaux enroulés à pas long autour de l'axe A-A' de la conduite.

Par « enroulé à pas long », on entend que la valeur absolue de l'angle d'hélice par rapport à l'axe A-A' est inférieure à 60°, et est typiquement comprise entre 10° et 60°, notamment entre 25° et 55°.

Les éléments d'armure 74 d'une première couche 24 sont enroulés généralement suivant un angle opposé par rapport aux éléments d'armure 74 d'une deuxième couche 25. Ainsi, si l'angle d'enroulement des éléments d'armure 74 de la première couche 24 est égal à +α, α étant compris entre 10° et 60°, l'angle d'enroulement des éléments d'armure 74 de la deuxième couche d'armures 25 disposée au contact de la première couche d'armures 24 est par exemple égal à - α°.

Les éléments d'armure 74 sont par exemple formés par des fils métalliques, notamment des fils en acier, ou par des rubans en matériau composite, par exemple des rubans renforcés de fibres de carbone.

Le matériau métallique formant les éléments d'armure 74 est choisi avantageusement parmi un acier au carbone, notamment choisi parmi les grades d'acier au carbone comprenant entre 0,1% et 0,8% de carbone. Lors des applications en milieu particulièrement corrosif, le matériau métallique est choisi parmi les aciers inoxydables tels que les aciers duplex.

Dans cet exemple, chaque couche d'armures de traction 24, 25 repose avantageusement sur au moins une bande anti-usure 75, visible sur les figures 1 et 2. La bande anti-usure 75 est par exemple réalisée en plastique, notamment à base d'un polyamide, d'un polyfluorure de vinylidène (PVDF), d'un polyphénylsulfone (PPSU) ou encore d'un polyétheréthercétone (PEEK). Elle présente une épaisseur inférieure à l'épaisseur de chaque gaine interne ou externe.

Avantageusement, un ruban de maintien tel qu'une bande en aramide à résistance mécanique élevée (Technora^{®} ou Kevlar^{®}) est enroulé autour de la deuxième couche d'armures de traction 25 la plus à l'extérieur par rapport à l'axe A-A', pour assurer un maintien mécanique des couches d'armures de traction 24, 25. Alternativement, les fibres d'aramide sont remplacées par des fibres de verre, des fibres de carbone ou des fibres de basalte.

La gaine extérieure 30 est destinée à empêcher la pénétration de fluide depuis l'extérieur de la conduite flexible 10 vers l'intérieur, dans l'espace annulaire entre la gaine de pression 20 et la gaine extérieure 30. Elle est avantageusement réalisée en matériau polymère, notamment à base d'un polyoléfine, tel que du polyéthylène, ou à base d'un polyamide, tel que du PA11 ou du PA12 ou dans l'un des matériaux cités ci-dessus pour la gaine 20.

L'épaisseur de la gaine extérieure 30 est par exemple comprise entre 5 mm et 15 mm.

La fabrication de la conduite flexible 10 selon l'invention va maintenant être décrite.

Initialement, les dimensions de la voûte de pression 27 sont déterminées. Le type de fil de forme profilé 40 est choisi, et en fonction du diamètre de voûte de pression 27 souhaité, le nombre et la taille des orifices de circulation de gaz 67 sont déterminés à partir de la valeur de surface de passage qu'aurait un jeu J1 et J2 par exemple de l'ordre de 0,10 mm.

Ce jeu dépend avantageusement de l'épaisseur du fil de forme 40 de la voûte de pression 27, et pourra être adapté, c'est-à-dire augmenté ou diminué en fonction du débit de gaz qui devra transiter dans la voûte de pression 40.

Chaque orifice de circulation de gaz 67 est ensuite ménagé à travers la partie centrale 44 de chaque spire 42 du fil de forme 40.

Puis, la gaine de pression 20 est fournie, par exemple en étant extrudée. Le fil de forme profilé 40, ici muni des orifices de circulation de gaz 67, est alors enroulé à pas court autour de la gaine de pression 20, en agrafant les tétons 50, 56 respectifs dans les gorges 58, 52 respectives, et en s'assurant que les pas de fabrication sont dans les tolérances recommandées de façon à assurer un interstice 62 et des canaux 64, 66 non nuls,

Ensuite, les couches d'armure 24, 25 sont mises en place et la gaine extérieure 30 est fournie autour des couches d'armure 24, 25, par exemple par extrusion.

En utilisation, lors de la circulation de fluide à travers le passage central 16 de la conduite, du gaz corrosif est susceptible de diffuser à travers la gaine de pression 20, et d'atteindre l'espace annulaire entre la gaine de pression 20 et la gaine extérieure 30 et plus précisément l'espace situé entre la voûte de pression 27 et la gaine de pression 20.

Ces gaz circulent successivement à travers le canal intérieur 64, dans les orifices de circulation de gaz 67 vers le canal extérieur 66. Ils circulent éventuellement également dans le premier jeu J1 entre le téton 50 et la gorge 58 lorsque ce jeu est présent, dans l'interstice 62 et dans le second jeu J2 entre le téton 56 et la gorge 52 lorsque ce jeu est présent, et enfin dans le canal extérieur 66.

Même si l'agrafage de la voûte de pression 27 conduit à un effet de blocage, lié à la diminution ou à la disparition des jeux J1 et/ou J2, la présence des orifices de circulation de gaz 67 garantit le passage des gaz, empêchant l'augmentation anormale de la pression partielle des gaz corrosifs à l'intérieur de la voûte de pression 27 et limitant donc fortement les phénomènes de corrosion, et notamment de corrosion sous contraintes (SCC).

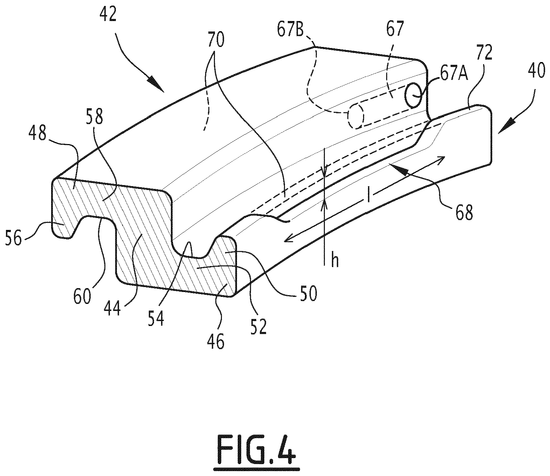

Dans une variante illustrée par la figure 4, les tétons 50, 56 de la spire 42 définissent au moins un passage additionnel 68 de circulation de gaz par téton 50, 56 s'ajoutant aux orifices de circulation de gaz 67 et à l'éventuel jeu hélicoïdal J1 et J2.

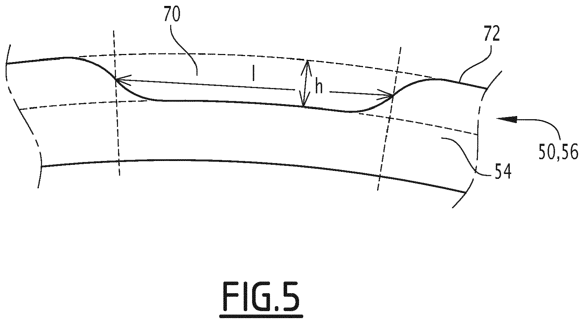

Comme illustré par les figures 4 et 5, chaque passage additionnel 68 est ici défini par une encoche 70 ménagée dans le bord libre 72 de chaque téton 50, 56.

Chaque encoche 70 débouche radialement respectivement vers l'extérieur ou vers l'intérieur, selon qu'elle est sur le téton 50 ou sur le téton 56 respectivement. Elles débouchent axialement dans l'interstice 62 et dans l'un des canaux 64, 66 de façon à garantir un passage du gaz de l'intérieur vers l'extérieur de la voûte 27 formée par l'enroulement d'un ou plusieurs fils de forme 40, quelle que soit la taille des jeux J1 et J2, et même si ceux-ci sont complètement fermés.

Comme illustré par la figure 4, chaque encoche 70 s'étend uniquement sur une partie de la circonférence du téton respectif 50, 56 autour de l'axe central A-A'.

En référence à la figure 5, en projection dans un plan transversal perpendiculaire à l'axe A-A', la largeur I de l'encoche 70, prise entre les points d'inflexions des bords de l'encoche 70 est avantageusement inférieure à 33% du périmètre du bord libre 72 du téton respectif 50, 56. En variante, la largeur I est augmentée ou bien diminuée en fonction des besoins de surface de passage, qui dépendent des débits de gaz à considérer, du dimensionnement et de la configuration structurelle de la structure de la conduite 10.

La hauteur maximale h de l'encoche 70, prise radialement par rapport à l'axe A-A', est comprise entre 5% et 100% de la hauteur du téton, prise radialement par rapport à l'axe central A-A' entre respectivement le fond 54 de la gorge 52 et le bord libre 72 du téton 50 ou entre le fond 60 de la gorge 58 et le bord libre 72 du téton 56 à l'écart de l'encoche 70.

De préférence, l'extrémité extérieure 67A de chaque orifice de circulation de gaz 67 oblique, et plus généralement la totalité de chaque orifice de circulation de gaz 67 est décalée angulairement et est située hors d'un secteur angulaire défini entre les bords de l'encoche 70 autour de l'axe A-A', en projection dans un plan perpendiculaire à l'axe A-A'.

Ainsi, le décalage angulaire de la position de l'orifice de circulation de gaz 67 oblique et de celle du passage additionnel 68, évite d'avoir, au niveau d'un même secteur angulaire, une accumulation de manque de matière conduisant à une accumulation de zones de concentration de contraintes. La résistance mécanique du fil de forme 40 est donc préservée.

En variante, non représentée, l'extrémité extérieure 67A d'au moins un orifice de circulation de gaz 67 oblique est situé dans un secteur angulaire défini par les bords de l'encoche 70 autour de l'axe A-A', en projection dans un plan perpendiculaire à l'axe A-A'.

Plus généralement, au moins une spire de la voûte de pression 27 présente un profil de géométrie en forme de T, de U, de K, de X ou de I.

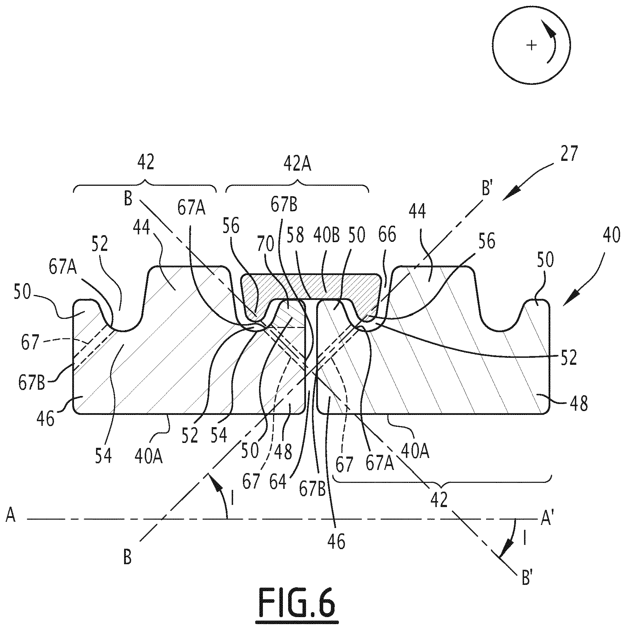

Ainsi, dans une variante représentée sur la figure 6, la voûte de pression 27 est formée de plusieurs fils de forme profilés 40A, 40B, de profils différents en section, agrafés les uns sur les autres.

Dans cet exemple, au moins un fil de forme profilé 40A est de profil en forme de T. Chaque spire 42 de ce fil 40A délimite, de part et d'autre de la région centrale 44, deux régions latérales 46, 48 comportant chacune un téton intérieur 50 faisant saillie vers l'extérieur, et pour chaque téton 50, une gorge intermédiaire 52 entre le téton 50 et la région centrale 44.

Le fil de forme profilé 40A est agrafé avec un autre fil de forme profilé 40B (généralement appelé clip) de profil en forme de U. Le profil en forme de U comporte une gorge additionnelle 58, et des tétons additionnels 56 extérieurs faisant saillie vers l'intérieur de part et d'autre de la gorge additionnelle 58.

Chaque téton 50 d'une spire 42 du fil de forme 40A est reçu dans la gorge additionnelle 58 d'une spire adjacente 42A du fil de forme 40B. De même, chaque téton additionnel 56 d'une spire 42A du fil de forme 40B est reçu dans la gorge 52 d'une spire adjacente 42 du fil de forme 40A.

Dans cet exemple, au moins un orifice de circulation de gaz 67 oblique est ménagé à travers le fil de forme profilé 40A, pour chaque spire 42 du fil de forme 40A.

Au moins un orifice de circulation de gaz 67 est ici ménagé en oblique à travers la première région latérale 46 avec un angle d'inclinaison I positif tel que défini plus haut. Il débouche à son extrémité intérieure 67B dans le canal intérieur 64 défini entre les spires 42 successives du fil de forme 40A, le canal intérieur 64 étant fermé vers l'extérieur par la spire 42A de l'autre fil de forme profilé 40B.

Avantageusement, au moins un autre orifice de circulation de gaz 67 est aussi ménagé en oblique à travers la deuxième région latérale 48 avec un angle d'inclinaison I négatif tel que défini plus haut. Il débouche également à son extrémité intérieure 67B dans le canal intérieur 64 défini entre les spires 42 successives du fil de forme 40A, le canal intérieur 64 étant fermé vers l'extérieur par la spire 42A de l'autre fil de forme profilé 40B.

Ainsi, chaque canal intérieur 64 entre deux spires 42 successives est raccordé d'un côté, à au moins un orifice de circulation de gaz 67 ménagé à travers la première région latérale 46 d'une spire 42 et d'un autre côté, à au moins un orifice de circulation de gaz 67, ménagé à travers la deuxième région latérale 48 de la spire 42 adjacente.

Ceci permet d'espacer les orifices de circulation de gaz 67 le long du fil 40.

Pour une même spire 40A, les orifices de circulation de gaz 67 ménagés dans la première région latérale 46 et dans la deuxième région latérale 48 sont situés dans des secteurs angulaires distincts autour de l'axe central A-A'.

Ainsi, la perte de résistance mécanique en traction est limitée.

L'orifice de circulation de gaz 67 débouche à son extrémité extérieure 67A dans la gorge 52, en aval du contact entre le téton 50 du fil de forme 40A et le fond de la gorge 58 du fil de forme additionnel 40B, dans le sens de circulation de gaz depuis l'intérieur vers l'extérieur de la conduite 10. Cette région aval de la gorge 52 est en communication fluidique permanent avec le canal extérieur 66 défini entre les spires 40A, 40B.

Eventuellement, au moins un passage additionnel 68 de circulation de gaz est ménagé sous forme d'une encoche 70 dans l'un des tétons 50 d'une spire du fil de forme 40A. De préférence, comme précédemment, au moins l'extrémité extérieure 67A de chaque orifice de circulation de gaz 67 oblique, et de préférence la totalité de chaque orifice de circulation de gaz 67 oblique est décalée angulairement et est située hors d'un secteur angulaire défini par rapport aux bords de l'encoche 70 autour de l'axe A-A', en projection dans un plan perpendiculaire à l'axe A-A'.

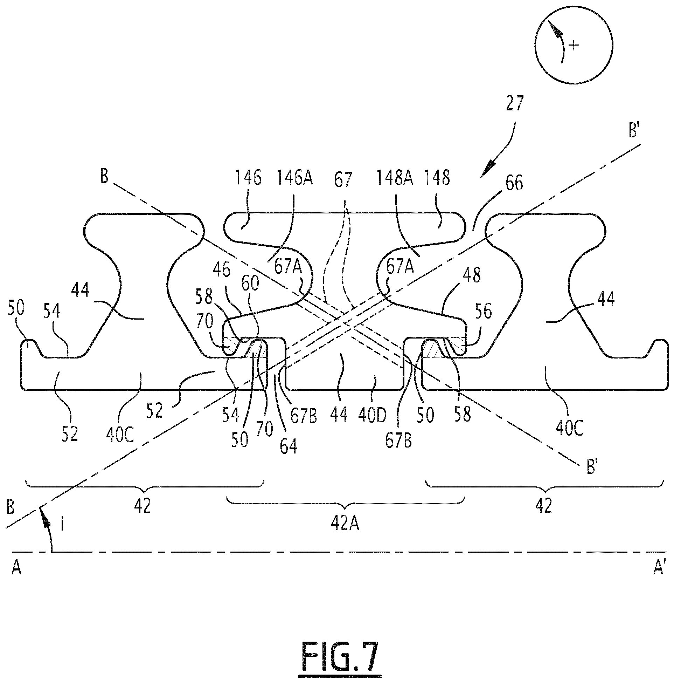

Dans la variante illustrée par la figure 7, au moins un fil de forme 40C présente un profil en forme de T et au moins au fil de forme 40D présente un profil en forme de K.

Le profil du fil de forme 40C définit un téton 50 intérieur et une gorge 52 intérieure entre le téton 50 et la partie centrale 44.

Le fil de forme additionnel 40D comporte une partie centrale 44 et deux parties latérales intérieures 46, 48 qui font saillie latéralement de part et d'autre de la partie centrale 44. Les parties latérales intérieures 44, 46 délimitent chacune un téton additionnel 56 qui fait saillie vers l'intérieur et une gorge additionnelle 58 entre le téton additionnel 56 et la partie centrale 44.

Chaque téton 50 d'une spire 42 du fil de forme 40C est reçu dans la gorge additionnelle 58 d'une spire adjacente 42A du fil de forme 40D. De même, chaque téton additionnel 56 d'une spire adjacente 42A du fil de forme 40D est reçu dans la gorge 52 de la spire 42 du fil de forme 40C.

Le fil de forme additionnel 40D comporte en outre deux parties latérales extérieures 146, 148 qui font saillie latéralement de part et d'autre de la partie centrale 44. Chaque partie latérale extérieure 146, 148 est située en regard d'une partie latérale intérieure respective 46, 48, suivant l'axe central A-A'.

Chaque partie latérale extérieure 146, 148 délimite avec une partie latérale intérieure 46, 48 respective, une rainure intermédiaire 146A, 148A débouchant parallèlement à l'axe central A-A', respectivement de part et d'autre de la partie centrale 144.

Dans cet exemple, au moins un orifice de circulation de gaz 67 oblique est ménagé à travers le fil de forme profilé 40D, pour chaque spire 42A du fil de forme 40D. L'angle d'inclinaison I de l'orifice de circulation de gaz 67 avec l'axe central A-A' est non nul et est positif. Il est par exemple proche de +45°, par exemple compris entre +40° et +50°.

Avantageusement, au moins un autre orifice de circulation de gaz 67 oblique est ménagé à travers le fil de forme profilé 40D, pour chaque spire 42A du fil de forme 40D, avec un angle d'inclinaison I de l'orifice de circulation de gaz 67 avec l'axe central A-A' non nul et négatif. Cet angle est par exemple proche de -45°, par exemple compris entre -40° et -50°.

De préférence, le fil de forme profilé 40D comporte une alternance d'orifices de circulation de gaz 67 d'angles d'inclinaison positifs et négatifs, leurs extrémités extérieures 67A débouchant alternativement dans les rainures intermédiaires 146A et 148B, présentes de part et d'autre du fil de forme 40D.

Une alternance d'orifices de circulation de gaz 67 permet une meilleure évacuation des gaz au niveau des canaux intérieurs 64, entre chaque spire 42, 42A des fils de forme 40C, 40D.

Chaque orifice de circulation de gaz 67 ménagé en oblique à travers la région centrale 44 avec un angle d'inclinaison I positif ou négatif tel que défini plus haut débouche à son extrémité intérieure 67B dans un canal intérieur 64 défini entre deux spires 42, 42A successives agrafées des fils respectifs 40C, 40D, intérieurement par rapport à la partie latérale intérieure 46 du fil de forme 40D.

Il débouche à son extrémité aval 67A dans une rainure 148A, 146 A respective, en aval du contact éventuel entre le téton 50 du fil de forme 40C et le fond de la gorge 58 du fil de forme additionnel 40D, et en aval du contact éventuel entre le téton additionnel 56 de la partie latérale intérieure 48 du fil de forme 40D et le fond de la gorge 52 du fil de forme 40C, dans le sens de circulation de gaz depuis l'intérieur vers l'extérieur de la conduite 10.

Chaque rainure 148A, 146A est en communication fluidique permanente avec le canal extérieur 66 défini entre les spires 40C, 40D.

Eventuellement, un passage additionnel 68 de circulation de gaz est ménagé sous forme d'une encoche 70 dans les tétons 50, 56. De préférence, comme précédemment, au moins l'extrémité extérieure 67A de chaque orifice de circulation de gaz 67 oblique et de préférence la totalité de chaque orifice de circulation de gaz 67 oblique est décalée angulairement et est située hors d'un secteur angulaire défini par rapport aux bords de l'encoche 70 autour de l'axe A-A', en projection dans un plan perpendiculaire à l'axe A-A'.

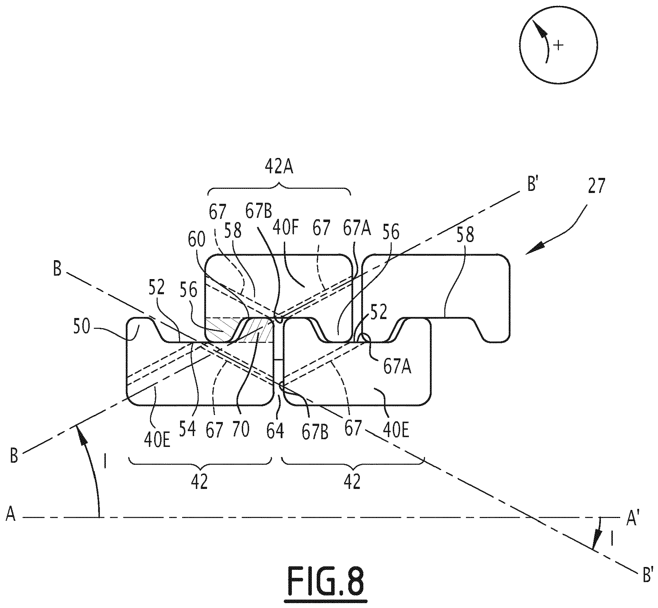

Dans la variante représentée sur la figure 8, le fil de forme 40E présente un profil en forme de U s'ouvrant radialement vers l'extérieur et le fil de forme 40F, agrafé avec le fil de forme 40E, présente un profil en forme de C s'ouvrant radialement vers l'intérieur.

Le profil du fil de forme 40E délimite une gorge 52 centrale et comporte deux tétons 50 intérieurs faisant saillie vers l'extérieur de part et d'autre de la gorge 52.

Le profil du fil de forme 40F présente une gorge additionnelle 58 et de part et d'autre de la gorge additionnelle 58, deux tétons additionnels 56 extérieurs faisant saillie vers l'intérieur à partir de la gorge additionnelle 58.

Chaque téton 50 du fil de forme 40E est reçu dans une gorge additionnelle 58 du fil de forme 40F, et chaque téton additionnel 56 du fil de forme 40F, est reçu dans une gorge 52 du fil de forme 40E.

Le fil de forme 40E définit intérieurement au moins un premier orifice de circulation de gaz 67 oblique, avec un angle d'inclinaison I positif tel que défini plus haut. Le premier orifice de circulation de gaz 67 débouche à son extrémité intérieure 67B dans le canal intérieur 64 défini entre les spires 42 successives du fil de forme 40E, dans une face latérale du fil de forme 40E, située intérieurement par rapport au téton 50. Le canal intérieur 64 est ici délimité vers l'extérieur par le fond de la gorge additionnelle 58 de l'autre fil de forme 40F.

Le premier orifice de circulation de gaz 67 débouche à son extrémité extérieure 67A dans le fond de la gorge 52, dans le canal extérieur 66 défini entre les spires 42A successives du fil de forme 40F.

Avantageusement, le fil de forme 40E définit intérieurement au moins un premier orifice de circulation de gaz 67 oblique, avec un angle d'inclinaison I négatif tel que défini plus haut (non représenté). Le premier orifice de circulation de gaz 67 débouche à son extrémité intérieure 67B dans le canal intérieur 64 défini entre les spires 42 successives du fil de forme 40E, dans une face latérale du fil de forme 40E, située intérieurement par rapport au téton 50.

De même, le fil de forme 40F définit intérieurement au moins un deuxième orifice de circulation de gaz 67 oblique avec un angle d'inclinaison I positif tel que défini plus haut. Le deuxième orifice de circulation de gaz 67 débouche à son extrémité intérieure 67B dans le fond de la gorge additionnelle 58, dans le canal intérieur 64 défini entre les spires 42 successives du fil de forme 40E.

Le deuxième orifice de circulation de gaz 67 débouche à son extrémité extérieure 67A dans le canal extérieur 66 défini entre les spires 42A successives du fil de forme 40F, dans une face latérale du fil de forme 40F, extérieurement par rapport au téton additionnel 56.

Avantageusement, le fil de forme 40F définit intérieurement au moins un deuxième orifice de circulation de gaz 67 oblique avec un angle d'inclinaison I négatif tel que défini plus haut (non représenté). Le deuxième orifice de circulation de gaz 67 débouche à son extrémité intérieure 67B dans le fond de la gorge additionnelle 58, dans le canal intérieur 64 défini entre les spires 42 successives du fil de forme 40E.

Le deuxième orifice de circulation de gaz 67 débouche à son extrémité extérieure 67A dans le canal extérieur 66 défini entre les spires 42A successives du fil de forme 40F, dans une face latérale du fil de forme 40F, extérieurement par rapport au téton additionnel 56.

Eventuellement, au moins un passage additionnel 68 de circulation de gaz est ménagé sous forme d'une encoche 70 dans les tétons 50, 56, comme décrit précédemment. De préférence, comme précédemment, au moins l'extrémité extérieure 67A de chaque orifice de circulation de gaz 67 oblique et de préférence la totalité de chaque orifice de circulation de gaz 67 oblique est décalée angulairement et est située hors d'un secteur angulaire défini par rapport aux bords de l'encoche 70 autour de l'axe A-A', en projection dans un plan perpendiculaire à l'axe A-A'.

Dans une variante (non représentée) des exemples précédents, la conduite flexible 10 comporte au moins une première région longitudinale comportant des spires du ou de chaque fil de forme 40, 40A à 40F définissant au moins un orifice de circulation de gaz 67 oblique, sans aucun passage de circulation additionnel 68, en particulier sans encoche 70 dans le ou dans chaque téton 50, 56. La conduite flexible 10 comporte au moins une deuxième région longitudinale comportant des spires du ou de chaque fil de forme 40, 40A à 40F présentant des passages de circulation additionnels 68, notamment des encoches 70 dans le ou dans chaque téton 50, 56, sans aucun orifice de circulation de gaz 67 oblique.

De préférence, la ou chaque première région longitudinale est de préférence une région de la conduite 10 sollicitée dynamiquement une fois la conduite posée, par exemple au voisinage d'un ensemble de surface flottant (partie supérieure de la conduite 10 située sous le raidisseur) ou encore en milieu de ligne flexible (par exemple en présence de courbure affaissée « sag bend » ou « hog bend » en anglais).

La ou chaque deuxième région longitudinale de la conduite 10 est de préférence une région statique une fois la conduite posée, par exemple à proximité du point de pose sur le fond marin (« touch down point ») et/ou dans le cas d'une ligne de production de fluide posée sur le fond de l'étendue d'eau.

Les conduites 10 selon l'invention dans les zones dynamiques présentent donc des orifices de circulation de gaz 67 obliques qui sont généralement situés dans ou au voisinage de la région centrale massive des fils de forme, diminuant ainsi les concentrations de contraintes lors de la fabrication et de l'utilisation du fil de forme dans la conduite 10. De plus les orifices de circulation de gaz 67 obliques ne sont généralement pas situés dans des zones soumises à l'usure, résultant de contacts et de frottements contrairement aux encoches dont la géométrie peut être altérée dans le temps en fonction de l'usure.

Les orifices de circulation de gaz 67 obliques limitent l'impact sur les concentrations de contrainte au sein du ou de chaque fil de forme, ce qui améliore la tenue en fatigue de la voûte de pression 27.

La configuration et la position des orifices de circulation de gaz 67 obliques permet d'augmenter leur diamètre, par exemple de l'ordre de 30% par rapport à des trous radiaux.

Les orifices de circulation de gaz 67 obliques étant alors de plus grand diamètre, le risque qu'ils se bouchent est diminué, ce qui permet en outre de les espacer.

De plus, les trous radiaux conduisent à une diffusion radiale se heurtant à des effets de masquage car ils débouchent sur des nappes adjacentes contrairement aux orifices de circulation de gaz 67 obliques qui débouchent dans des jeux permettant une diffusion circonférentielle et radiale.

## Revendications

1. Conduite flexible (10) de transport de fluide comportant :
- une gaine tubulaire (20) en polymère délimitant un passage (16) de circulation de fluide d'axe central (A-A') ;
- une voûte de pression (27), disposée autour et à l'extérieur de la gaine tubulaire (20), la voûte de pression (27) comportant un enroulement à pas court d'au moins un fil de forme (40 ; 40A à 40F), le fil de forme (40 ; 40A à 40F) comportant une pluralité de spires (42, 42A, 42B) agrafées ;
- au moins une couche d'armures (24, 25) disposée à l'extérieur de la voûte de pression (27),
**caractérisé en ce que** le fil de forme (40 ; 40A à 40F) présente au moins un orifice (67) de circulation de gaz oblique à travers la voûte de pression (27) depuis l'intérieur de la voûte de pression (27) vers l'extérieur de la voûte de pression (27), l'orifice de circulation de gaz (67) oblique présentant au moins un axe local (B-B') oblique définissant, avec l'axe central (A-A'), un angle d'inclinaison (I) non nul strictement inférieur à +90° et strictement supérieur à -90°, l'orifice de circulation de gaz (67) oblique permettant la circulation de gaz entre l'intérieur de la voûte de pression (27) et l'extérieur de la voûte de pression (27) en plus d'au moins un jeu (J1, J2) entre les spires agrafées (42, 42A, 42B), ou en l'absence de jeu (J1, J2) entre les spires agrafées (42, 42A, 42B).

2. Conduite flexible (10) selon la revendication 1, dans laquelle l'angle d'inclinaison (I) est compris entre +15° et + 60° ou entre -15° et -60°, notamment entre +20° et +40° ou entre -20° et -40°.

3. Conduite flexible (10) selon la revendication 1 ou 2, dans laquelle chaque spire (42, 42A, 42B) définit au moins un orifice (67) de circulation de gaz oblique ayant un angle d'inclinaison (I) positif et au moins un orifice (67) de circulation de gaz oblique ayant un angle d'inclinaison (I) négatif, le ou chaque orifice (67) de circulation de gaz oblique ayant un angle d'inclinaison (I) positif étant de préférence décalé angulairement du ou de chaque orifice (67) de circulation de gaz oblique ayant un angle d'inclinaison (I) négatif autour de l'axe central (A-A').

4. Conduite flexible (10) selon l'une quelconque des revendications précédentes, dans laquelle chaque spire (42, 42A, 42B) définit entre un et vingt orifices de circulation de gaz (67) obliques présentant un axe local (B-B') oblique.

5. Conduite flexible (10) selon l'une quelconque des revendications précédentes, dans laquelle le ou chaque orifice de circulation de gaz (67) oblique présente une dimension transversale minimale, prise perpendiculairement à l'axe local (B-B') oblique, supérieure à 0,1 mm et notamment comprise entre 0,5 mm et 3 mm.

6. Conduite flexible (10) selon l'une quelconque des revendications précédentes, dans laquelle le ou chaque orifice de circulation de gaz (67) oblique s'étend le long de l'axe local (B-B') oblique à travers la voûte de pression (27) entre une extrémité intérieure (67B) et une extrémité extérieure (67A), éventuellement avec l'axe local oblique (B-B') incliné par rapport à une perpendiculaire à un axe longitudinal local (C-C') du fil de forme.

7. Conduite flexible (10) selon l'une quelconque des revendications précédentes dans laquelle chaque spire (42) définit avec une spire adjacente (42A), un canal intérieur (64) débouchant vers la gaine tubulaire (20) et avec une spire adjacente (42B) opposée, un canal extérieur (66) débouchant vers la ou chaque couche d'armures (24, 25), le ou chaque orifice de circulation de gaz (67) oblique ménagé à travers la spire (42) débouchant à une extrémité intérieure (67B), dans le canal intérieur (64) entre la spire (42) et la spire adjacente (42A) et à une extrémité extérieure (67A), dans le canal extérieur (66) entre la spire (42) et la spire adjacente opposée (42B).

8. Conduite flexible (10) selon l'une quelconque des revendications précédentes, dans laquelle chaque spire (42) présente, en section dans un plan axial médian, un profil définissant une partie centrale (44) et au moins une partie d'extrémité (46, 48), la ou chaque partie d'extrémité (46, 48) comportant au moins un téton (50, 56) et pour le ou chaque téton (50, 56), une gorge (52, 58) adjacente au téton (50, 56), le téton (50, 56) étant propre à s'agrafer dans une gorge (58, 52) d'une spire adjacente d'un fil de forme (40 ; 40A à 40F) de la voûte de pression (27), le ou chaque orifice de circulation de gaz (67) oblique s'étendant au moins partiellement à travers la partie centrale (44).

9. Conduite flexible (10) selon la revendication 8, dans laquelle le profil de chaque spire (42) définit, en section dans un plan axial médian, un téton (50) et une gorge (52) adjacente au téton (50), le téton (50) étant propre à s'agrafer dans une gorge (58) d'une spire adjacente d'un fil de forme (40 ; 40A à 40F) de la voûte de pression (27), le profil de chaque spire (42) définissant, en section dans un plan axial médian, un téton additionnel (56) et une gorge additionnelle (58) adjacente au téton additionnel (56), le téton additionnel (56) étant propre à s'agrafer dans une gorge (52) d'une spire adjacente opposée d'un fil de forme (40 ; 40A à 40F) de la voûte de pression (27), située à l'opposé de la spire adjacente.

10. Conduite flexible (10) selon l'une des revendications 8 ou 9, comprenant au moins un passage additionnel (68) de circulation de gaz formé par une encoche (70) ménagée dans le ou dans chaque téton (50, 56), et dans lequel, optionnellement, la largeur de l'encoche (70) ménagée dans le ou dans chaque téton (50, 56) est inférieure à 33% du périmètre du bord libre (72) du téton (50, 56).

11. Conduite flexible (10) selon la revendication 10, dans laquelle la hauteur de l'encoche (70) est comprise entre 5% et 100% de la hauteur du téton (50, 56), prise radialement par rapport à l'axe central (A-A') entre le fond (54, 60) de la gorge (52, 58) et le bord libre (72) du téton (50, 56) à l'écart de l'encoche (70).

12. Conduite flexible (10) selon l'une quelconque des revendications 10 à 11, comprenant au moins une première région longitudinale comportant des spires (42) définissant au moins un orifice de circulation de gaz (67) oblique, sans aucun passage additionnel (68) de circulation de gaz dans le ou dans chaque téton (50, 56), et une deuxième région longitudinale comportant des spires (42) présentant au moins un passage additionnel (68) de circulation de gaz dans le ou chaque dans téton (50, 56), sans aucun orifice de circulation de gaz (67) oblique.

13. Conduite (10) selon l'une quelconque des revendications précédentes, dans laquelle le profil du fil de forme (40 ; 40A ; 40C ; 40E) est choisi parmi un profil de section en Z, en T, en Ψ, en K et en C.

14. Procédé de fabrication d'une conduite flexible (10), comportant les étapes suivantes :
- fourniture d'une gaine tubulaire (20) en polymère délimitant un passage (16) de circulation de fluide d'axe central (A-A') ;
- formation d'une voûte de pression (27) autour de la gaine tubulaire (20), la formation comportant un enroulement à pas court et un agrafage d'au moins un fil de forme (40 ; 40A à 40F), le fil de forme (40 ; 40A à 40F) comportant une pluralité de spires (42, 42A, 42B) agrafées ;
- disposition d'au moins une couche d'armures (24, 25) à l'extérieur de la voûte de pression (27),
**caractérisé en ce que** le fil de forme (40 ; 40A à 40F) présente au moins un orifice de circulation de gaz (67) oblique à travers la voûte de pression (27) depuis l'intérieur de la voûte de pression (27) vers l'extérieur de la voûte de pression (27), l'orifice de circulation de gaz (67) oblique présentant au moins un axe local (B-B') oblique définissant, avec l'axe central (A-A'), un angle d'inclinaison (I) non nul strictement inférieur à 90°, l'orifice de circulation de gaz (67) oblique permettant la circulation de gaz entre l'intérieur de la voûte de pression (27) et l'extérieur de la voûte de pression (27) en plus d'au moins un jeu (J1, J2) entre les spires agrafées, ou en l'absence de jeu (J1, J2) entre les spires agrafées.

15. Procédé selon la revendication 14, dans lequel le ou chaque orifice de circulation de gaz (67) oblique est ménagé préalablement à l'enroulement du ou de chaque fil de forme (40 ; 40A à 40F), par usinage, par électroérosion, par faisceau d'électrons ou par perçage laser.

## Patentansprüche

1. Flexible Leitung (10) für Fluidtransport, umfassend:
- eine rohrförmige Hülle (20) aus Polymer, die einen Durchgang (16) für Fluidzirkulation mit einer Mittelachse (A-A') begrenzt;
- ein Druckgewölbe (27), das um und außerhalb des rohrförmigen Mantels (20) angeordnet ist, das Druckgewölbe (27) umfassend eine Wicklung mit kurzer Steigung von mindestens einem Formdraht (40; 40A-40F), wobei der Formdraht (40; 40A-40F) eine Vielzahl von geklammerten Windungen (42, 42A, 42B) aufweist;
- mindestens eine Bewehrungsschicht (24, 25), die außerhalb des Druckgewölbes (27) angeordnet ist,
**dadurch gekennzeichnet, dass** der Formdraht (40; 40A bis 40F) mindestens eine schräge Gaszirkulationsöffnung (67) durch das Druckgewölbe (27) von dem Inneren des Druckgewölbes (27) zum Äußeren des Druckgewölbes (27) aufweist, wobei die schräge Gaszirkulationsöffnung (67) mindestens eine schräge lokale Achse (B-B') aufweist, die mit der Mittelachse (A-A') einen von Null verschiedenen Neigungswinkel (I) definiert, der strikt kleiner als +90° und strikt größer als -90° ist, wobei die schräge Gaszirkulationsöffnung (67) die Gaszirkulation zwischen dem Inneren des Druckgewölbes (27) und dem Äußeren des Druckgewölbes (27) zusätzlich zu mindestens einem Spiel (J1, J2) zwischen den geklammerten Windungen (42, 42A, 42B) oder bei Fehlen eines Spiels (J1, J2) zwischen den geklammerten Windungen (42, 42A, 42B) ermöglicht.

2. Flexible Rohrleitung (10) nach Anspruch 1, wobei der Neigungswinkel (I) zwischen +15° und +60° oder zwischen -15° und -60°, insbesondere zwischen +20° und +40° oder zwischen -20° und -40° liegt.

3. Flexible Leitung (10) nach Anspruch 1 oder 2, wobei jede Windung (42, 42A, 42B) mindestens eine schräge Gaszirkulationsöffnung (67), die einen positiven Neigungswinkel (I) aufweist, und mindestens eine schräge Gaszirkulationsöffnung (67), die einen negativen Neigungswinkel (I) aufweist, definiert, wobei die oder jede schräge Gaszirkulationsöffnung (67) mit einem positiven Neigungswinkel (I) vorzugsweise winkelversetzt zu der oder jeder schrägen Gaszirkulationsöffnung (67) mit einem negativen Neigungswinkel (I) um die Mittelachse (A-A') angeordnet ist.

4. Flexible Leitung (10) nach einem der vorherigen Ansprüche, wobei jede Windung (42, 42A, 42B) zwischen einer und zwanzig schräge Gaszirkulationsöffnungen (67) definiert, die eine schräge lokale Achse (B-B') aufweisen.

5. Flexible Leitung (10) nach einem der vorherigen Ansprüche, wobei die oder jede schräge Gaszirkulationsöffnung (67) eine minimale Querabmessung, senkrecht zu der schrägen lokalen Achse (B-B') genommen, aufweist, die größer als 0,1 mm ist und insbesondere zwischen 0,5 mm und 3 mm liegt.

6. Flexible Leitung (10) nach einem der vorherigen Ansprüche, wobei sich die oder jede schräge Gaszirkulationsöffnung (67) entlang der schrägen lokalen Achse (B-B') durch das Druckgewölbe (27) zwischen einem inneren Ende (67B) und einem äußeren Ende (67A) erstreckt, optional mit der schrägen lokalen Achse (B-B') geneigt zu einer Senkrechten zu einer lokalen Längsachse (C-C') des Formdrahts.

7. Flexible Leitung (10) nach einem der vorherigen Ansprüche, wobei jede Windung (42) mit einer benachbarten Windung (42A) einen inneren Kanal (64) definiert, der zu dem rohrförmigen Mantel (20) hin mündet, und mit einer gegenüberliegenden benachbarten Windung (42B) einen äußeren Kanal (66), der zu der oder jeder Bewehrungsschicht (24, 25) hin mündet, die oder jede schräge Gaszirkulationsöffnung (67), die durch die Windung (42) hindurch ausgebildet ist, an einem inneren Ende (67B) in den inneren Kanal (64) zwischen der Windung (42) und der benachbarten Windung (42A) und an einem äußeren Ende (67A) in den äußeren Kanal (66) zwischen der Windung (42) und der gegenüberliegenden benachbarten Windung (42B) mündet.

8. Flexible Leitung (10) nach einem der vorherigen Ansprüche, wobei jede Windung (42) im Querschnitt in einer axialen Mittelebene ein Profil aufweist, das einen Mittelteil (44) und mindestens einen Endteil (46, 48) definiert, wobei der oder jeder Endabschnitt (46, 48) mindestens einen Zapfen (50, 56) und für den oder jeden Zapfen (50, 56) eine Nut (52, 58) angrenzend an den Zapfen (50, 56) aufweist, wobei der Zapfen (50, 56) geeignet ist, um in eine Nut (58, 52) einer angrenzenden Windung eines Formdrahts (40; 40A bis 40F) des Druckgewölbes (27) geklammert zu werden, wobei sich die oder jede schräge Gaszirkulationsöffnung (67) zumindest teilweise durch den Mittelteil (44) erstreckt.

9. Flexible Leitung (10) nach Anspruch 8, wobei das Profil jeder Windung (42) im Querschnitt in einer axialen Mittelebene einen Zapfen (50) und eine Nut (52) neben dem Zapfen (50) definiert, wobei der Zapfen (50) geeignet ist, in eine Nut (58) einer benachbarten Windung eines Formdrahts (40; 40A bis 40F) des Druckgewölbes (27) geklammert zu werden, wobei das Profil jeder Windung (42) im Querschnitt in einer axialen Mittelebene einen zusätzlichen Zapfen (56) und eine zusätzliche Nut (58) benachbart zu dem zusätzlichen Zapfen (56) definiert, wobei der zusätzliche Zapfen (56) geeignet ist, um in eine Nut (52) einer gegenüberliegenden benachbarten Windung eines Formdrahts (40; 40A bis 40F) des Druckgewölbes (27), das sich gegenüber der benachbarten Windung befindet, geklammert zu werden.

10. Flexible Leitung (10) nach einem der Ansprüche 8 oder 9, mindestens umfassend einen zusätzlichen Gaszirkulationsdurchgang (68), der durch eine Kerbe (70) gebildet ist, die in dem oder jedem Zapfen (50, 56) ausgebildet ist, und wobei optional die Breite der Kerbe (70), die in dem oder jedem Zapfen (50, 56) ausgebildet ist, weniger als 33 % des Umfangs des freien Rands (72) des Zapfens (50, 56) ist.

11. Flexible Leitung (10) nach Anspruch 10, wobei die Höhe der Kerbe (70), radial genommen in Bezug auf die Mittelachse (A-A') zwischen dem Boden (54, 60) der Nut (52, 58) und dem freien Rand (72) des Zapfens (50, 56) in einem Abstand von der Kerbe (70), zwischen 5 % und 100 % der Höhe des Zapfens (50, 56) liegt.

12. Flexible Leitung (10) nach einem der Ansprüche 10 bis 11, umfassend mindestens einen ersten Längsbereich, der Windungen (42) aufweist, die mindestens eine schräge Gaszirkulationsöffnung (67) definieren, ohne zusätzlichen Gaszirkulationsdurchgang (68) in dem oder jedem Zapfen (50, 56), und einen zweiten Längsbereich mit Windungen (42), die mindestens einen zusätzlichen Gaszirkulationsdurchgang (68) in dem oder jedem Zapfen (50, 56) aufweisen, ohne zusätzliche schräge Gaszirkulationsöffnungen (67).

13. Leitung (10) nach einem der vorherigen Ansprüche, wobei das Profil des Formdrahts (40; 40A; 40C; 40E) ausgewählt ist aus einem Z-, T-, Ψ, K- und C-Querschnittsprofil.

14. Verfahren zur Herstellung einer flexiblen Leitung (10), umfassend die folgenden Schritte:
- Bereitstellen einer rohrförmigen Hülle (20) aus Polymer, die einen Durchgang (16) für Fluidzirkulation mit einer Mittelachse (A-A') begrenzt;
- Bilden eines Druckgewölbes (27) um den rohrförmigen Mantel (20), wobei das Bilden ein Wickeln mit kurzer Steigung und ein Klammern von mindestens einem Formdraht (40; 40A-40F) umfasst, wobei der Formdraht (40; 40A-40F) eine Vielzahl von geklammerten Windungen (42, 42A, 42B) aufweist;
- Anordnen mindestens einer Bewehrungsschicht (24, 25) außerhalb des Druckgewölbes (27),
**dadurch gekennzeichnet, dass** der Formdraht (40; 40A bis 40F) mindestens eine schräge Gaszirkulationsöffnung (67) durch das Druckgewölbe (27) von dem Inneren des Druckgewölbes (27) zu dem Äußeren des Druckgewölbes (27) aufweist, wobei die schräge Gaszirkulationsöffnung (67) mindestens eine schräge lokale Achse (B-B') aufweist, die mit der Mittelachse (A-A') einen von Null verschiedenen Neigungswinkel (I) definiert, der strikt kleiner als +90° ist, wobei die schräge Gaszirkulationsöffnung (67) die Gaszirkulation zwischen dem Inneren des Druckgewölbes (27) und dem Äußeren des Druckgewölbes (27) zusätzlich zu mindestens einem Spiel (J1, J2) zwischen den geklammerten Windungen oder bei Fehlen eines Spiels (J1, J2) zwischen den geklammerten Windungen ermöglicht.

15. Verfahren nach Anspruch 14, wobei die oder jede schräge Gaszirkulationsöffnung (67) vor dem Wickeln des oder jedes Formdrahts (40; 40A bis 40F) durch spanende Bearbeitung, Funkenerosion, Elektronenstrahl oder Laserbohren ausgebildet wird.

## Claims

1. A flexible pipe (10) for transporting a fluid, comprising:
- an inner sheath (20) made of polymer, delimiting a fluid circulation passage (16) having a central axis (A-A');
- a pressure vault (27), arranged around and outside the tubular sheath (20), the pressure vault (27) comprising a short-pitch winding of at least one shaped wire (40; 40A to 40F), the shaped wire (40; 40A to 40F) comprising a plurality of spirals (42, 42A, 42B) stapled together;
- at least one layer of armour (24, 25) arranged on the outside of the pressure vault (27),
**characterised in that** the shaped wire (40 ; 40A to 40F) has at least one oblique gas circulation orifice (67) through the pressure vault (27) from the inside of the pressure vault (27) to the outside of the pressure vault (27), the oblique gas circulation orifice (67) having at least one oblique local axis (B-B') defining, with the central axis (A-A'), an angle of inclination (I) not zero strictly less than +90° and strictly greater than -90°, the oblique gas circulation orifice (67) allowing the circulation of gas between the inside of the pressure vault (27) and the outside of the pressure vault (27) in addition to at least one gap (J1, J2) between the stapled spirals (42, 42A, 42B), or in the absence of gap (J1, J2) between the stapled spirals (42, 42A, 42B).

2. Flexible pipe (10) according to claim 1, in which the angle of inclination (I) is between +15° and +60° or between -15° and -60°, in particular between +20° and +40° or between -20° and -40°.

3. Flexible pipe (10) according to claim 1 or 2, in which each spiral (42, 42A, 42B) defines at least one oblique gas flow orifice (67) having a positive angle of inclination (I) and at least one oblique gas flow orifice (67) having a negative angle of inclination (I), the or each oblique gas flow orifice (67) having a positive angle of inclination (I) preferably being angularly offset from the or each oblique gas flow orifice (67) having a negative angle of inclination (I) about the central axis (A-A').

4. Flexible pipe (10) according to any one of the preceding claims, in which each spiral (42, 42A, 42B) defines between one and twenty oblique gas circulation orifices (67) having an oblique local axis (B-B').

5. Flexible pipe (10) according to any one of the preceding claims, in which the or each oblique gas circulation orifice (67) has a minimum transverse dimension, taken perpendicularly to the oblique local axis (B-B'), greater than 0.1 mm and in particular between 0.5 mm and 3 mm.

6. A flexible conduit (10) according to any one of the preceding claims, wherein the or each oblique gas flow port (67) extends along the oblique local axis (B-B') through the pressure vault (27) between an inner end (67B) and an outer end (67A), optionally with the oblique local axis (B-B') inclined to a perpendicular to a local longitudinal axis (C-C') of the shaped wire.

7. Flexible pipe (10) according to any one of the preceding claims, in which each spiral (42) defines, with an adjacent spiral (42A), an internal channel (64) opening towards the tubular sheath (20) and, with an opposite adjacent spiral (42B), an external channel (66) opening towards the or each layer of armour (24, 25), the or each oblique gas circulation orifice (67) formed through the spiral (42) opening at an inner end (67B) into the inner channel (64) between the spiral (42) and the adjacent spiral (42A) and at an outer end (67A) into the outer channel (66) between the spiral (42) and the opposite adjacent spiral (42B).

8. Flexible pipe (10) according to any one of the preceding claims, in which each spiral (42) has, in cross-section in a median axial plane, a profile defining a central part (44) and at least one end part (46, 48), the or each end part (46, 48) comprising at least one stud (50, 56) and, for the or each stud (50, 56), a groove (52, 58) adjacent to the stud (50, 56), the stud (50, 56) being able to be hooked into a groove (58, 52) of an adjacent spiral of a shaped wire (4040A to 40F) of the pressure vault (27), the or each oblique gas flow orifice (67) extending at least partially through the central portion (44).

9. A flexible conduit (10) according to claim 8, wherein the profile of each spiral (42) defines, in section in a median axial plane, a stud (50) and a groove (52) adjacent to the stud (50), the stud (50) being adapted to clip into a groove (58) of an adjacent turn of a shaped wire (40; 40A to 40F) of the pressure vault (27), the profile of each spiral (42) defining, in section in a median axial plane, an additional stud (56) and an additional groove (58) adjacent to the additional stud (56), the additional stud (56) being adapted to clip into a groove (52) of an opposite adjacent turn of a shaped wire (40; 40A to 40F) of the pressure vault (27), situated opposite the adjacent spiral.

10. A flexible conduit (10) according to one of claims 8 or 9, comprising at least one additional gas flow passage (68) formed by a notch (70) in the or each stud (50, 56), and in which, optionally, the width of the notch (70) formed in the or each stud (50, 56) is less than 33% of the perimeter of the free edge (72) of the stud (50, 56).

11. Flexible pipe (10) according to claim 10, in which the height of the notch (70) is between 5% and 100% of the height of the stud (50, 56), taken radially with respect to the central axis (A-A') between the bottom (54, 60) of the groove (52, 58) and the free edge (72) of the stud (50, 56) away from the notch (70).

12. A flexible pipe (10) according to any one of claims 10 to 11, comprising at least a first longitudinal region comprising spirals (42) defining at least one oblique gas circulation orifice (67), without any additional gas circulation passage (68) in the or each stud (50, 56), and a second longitudinal region comprising spirals (42) having at least one additional gas flow passage (68) in the or each stud (50, 56), without any oblique gas flow orifice (67).

13. A pipe (10) according to any one of the preceding claims, in which the profile of the form wire (40; 40A; 40C; 40E) is chosen from a Z, T, Ψ, K and C cross-section profile.

14. A method of manufacturing a flexible pipe (10), comprising the following steps:
- provision of a tubular sheath (20) made of polymer delimiting a fluid circulation passage (16) with a central axis (A-A');
- forming a pressure vault (27) around the tubular sheath (20), the forming comprising short-pitch winding and stapling of at least one forming wire (40; 40A to 40F), the forming wire (40; 40A to 40F) comprising a plurality of stapled spirals (42, 42A, 42B);
- provision of at least one layer of armour (24, 25) on the outside of the pressure vault (27),
**characterised in that** the shaped wire (40; 40A to 40F) has at least one oblique gas flow orifice (67) through the pressure vault (27) from the inside of the pressure vault (27) to the outside of the pressure vault (27), the oblique gas circulation orifice (67) having at least one oblique local axis (B-B') defining, with the central axis (A-A'), a non-zero angle of inclination (I) strictly less than 90°, the oblique gas circulation orifice (67) allowing the circulation of gas between the inside of the pressure vault (27) and the outside of the pressure vault (27) in addition to at least one gap (J1, J2) between the stapled spirals, or in the absence of a gap (J1, J2) between the stapled spirals.

15. A method according to claim 14, in which the or each oblique gas circulation orifice (67) is provided prior to winding the or each form wire (40; 40A to 40F), by machining, by electro-erosion, by electron beam or by laser drilling.
